Europäisches Patentamt

European Patent Office

Office européen des brevets

(19)

(11) Veröffentlichungsnummer: **0 075 833**

A2

(12) **EUROPÄISCHE PATENTANMELDUNG**

(21) Anmeldenummer: **82108689.9**

(22) Anmeldetag: **20.09.82**

(51) Int. Cl.³: **G 01 K 7/22**

(30) Priorität: **28.09.81 DE 3138535**

(43) Veröffentlichungstag der Anmeldung:
**06.04.83 Patentblatt 83/14**

(84) Benannte Vertragsstaaten:
**FR GB NL**

(71) Anmelder: **SIEMENS AKTIENGESELLSCHAFT**
**Berlin und München Wittelsbacherplatz 2**
**D-8000 München 2(DE)**

(72) Erfinder: **Tomasi, Gilbert, Dr.-Ing.**
**Zaunkönigring 9**
**D-8011 Heimstetten(DE)**

(72) Erfinder: **Mitlehner, Heinz, Dr. rer. nat.**
**Hohenzollernstrasse 104**
**D-8000 München 40(DE)**

(54) **Temperatursensor mit einem Halbleiterkörper.**

(57) Die Erfindung betrifft einen Temperatursensor mit einem schichtförmigen Halbleiterkörper (3) als Meßwiderstand. Dieser Halbleiterkörper (3) ist auf einem Halbleitersubstrat (6) aufgebracht und mit zwei Kontaktelektroden (2, 8; 9, 13) versehen, die an den Enden des Halbleiterkörpers (3) liegen.

FIG 1

EP 0 075 833 A2

SIEMENS AKTIENGESELLSCHAFT

Berlin und München

Unser Zeichen

VPA

81 P 1 1 5 5 E

<u>Temperatursensor mit einem Halbleiterkörper</u>

Die Erfindung betrifft einen Temperatursensor mit einem Halbleiterkörper als Meßwiderstand, der an seinen zwei Enden mit wenigstens jeweils einer Kontaktelektrode versehen ist, so daß aus dem Widerstandswert des Halbleiterkörpers die Temperatur bestimmbar ist.

Aus der DE-OS 29 44 015 ist bereits ein Temperatursor aus einem Halbleiterkörper bekannt, der einerseits auf seiner Oberseite eine Isolierschicht aufweist, in der ein Fenster vorgesehen ist, durch das der Halbleiterkörper mit einem Metallkontakt versehen ist, und der andererseits auf seiner der Oberseite abgewandten Fläche eine Metallbelegung besitzt. Zusätzlich ist mindestens ein weiteres Fenster vorgesehen, durch das ein weiterer Metallkontakt den Halbleiterkörperkontakt kontaktiert, um so den Ausbreitungswiderstand zwischen den Metallkontakten und der Metallbelegung stromrichtungsunabhängig bzw. symmetrisch zu machen. Damit wird ein Temperatursensor ohne Stromrichtungsabhängigkeit des Widerstandswertes ermöglicht.

Bei diesem bekannten Temperatursensor wird für den Halbleiterkörper ein Siliciumsubstrat ohne pn-Übergang für den Meßwiderstand verwendet. Dies bedeutet, daß die Reproduzierbarkeit des Widerstand-Nennwertes bzw. des Temperaturkoeffizienten nur durch die Fototechnik zum Herstellen der Fenster und durch die Substrateigenschaften bestimmt wird. Die angestrebte Genauigkeit wird durch selektierende Messungen erreicht, da ein nachträgliches

Kot 1 Dx / 24.09.1981

Einstellen bzw. Trimmen des Widerstand-Nennwertes nicht möglich ist. Eine höhere Genauigkeit der einzelnen Temperatursensoren ist daher lediglich durch eine geringere Ausbeute zu erzielen. Außerdem ist der Einsatzbereich solcher Temperatursensoren durch beginnende Eigenleitung des Siliciumsubstrates auf Temperaturen unter etwa 150 $^{\circ}$C begrenzt.

Es ist daher Aufgabe der Erfindung, einen Temperatursensor der eingangs genannten Art zu schaffen, dessen Genauigkeit auch nachträglich eingestellt werden kann, was eine höhere Ausbeute erlaubt, und der bei Temperaturen über 150 $^{\circ}$C verwendbar ist.

Diese Aufgabe wird erfindungsgemäß dadurch gelöst, daß der Halbleiterkörper als Schicht ausgeführt ist, die auf einem Substrat angeordnet ist.

Das Substrat kann aus Halbleitermaterial bestehen und beispielsweise eine integrierte Schaltung enthalten. Zwischen dem Substrat und der Halbleiterschicht ist dann eine Isolierschicht vorgesehen. Die Halbleiterschicht kann aus amorphem, polykristallinem oder rekristallisiertem Silicium bestehen. Die Halbleiterschicht kann dabei durch Aufdampfen, Sputtern, Abscheiden in einer Glimmentladung oder durch chemische Dampfabschaltung auf das Substrat bzw. die Isolierschicht aufgebracht werden, wobei diese Halbleiterschicht anschließend partiell entfernt wird, um den temperaturempfindlichen Teil des Temperatursensors gegenüber der Umgebung zu isolieren. Dieses partielle Entfernen der Halbleiterschicht kann naß- oder trockenchemisch oder mittels Sputtern erfolgen. Die Halbleiterschicht kann lokal mittels Einwirkung eines Laserstrahles zerstört werden, wobei der Lasereinschnitt durch gleichzeitige Messung des Widerstandes des Temperatursensors gesteuert wird. Dadurch ist eine Einstellung des Nennwertes des Temperatursensors durch Laserabgleich gewährleistet. Auf diese Weise sind hohe Genauigkeiten (Abweichungen unter 0,1 %) ohne Verringerung der Ausbeute wie bei Ausleseverfahren erzielbar.

Für den Temperatursensor ist eine so genannte "Horizontal-Anordnung" oder eine "Vertikal-Anordnung" möglich. Bei der Horizontal-Anordnung befinden sich die beiden Elektroden an den beiden Enden der Halbleiterschicht parallel zur Oberfläche des Substrates, während bei der Vertikal-Anordnung die beiden Kontaktelektroden an den beiden Enden der Halbleiterschicht senkrecht zur Oberfläche des Substrates vorgesehen sind. Im zuletzt genannten Fall ist eine Kontaktelektrode zwischen der Isolierschicht und der Halbleiterschicht vorgesehen. Auch kann eine Passivierungsschicht auf die Halbleiterschicht und die Kontaktelektroden aufgetragen werden, was wiederum insbesondere für den zuerst genannten Fall gilt.

Nachfolgend wird die Erfindung an Hand der Zeichnung näher erläutert. Es zeigen:

Fig. 1 einen Schnitt durch einen Temperatursensor in Horizontal-Anordnung,

Fig. 2 eine Draufsicht auf den Temperatursensor von Fig. 1 (ohne die Passivierungsschicht 4),

Fig. 3 einen Schnitt durch einen Temperatursensor in Vertikal-Anordnung und

Fig. 4 eine Draufsicht auf den Temperatursensor von Fig. 3.

In den Figuren sind einander entsprechende Bauteile mit den gleichen Bezugszeichen versehen.

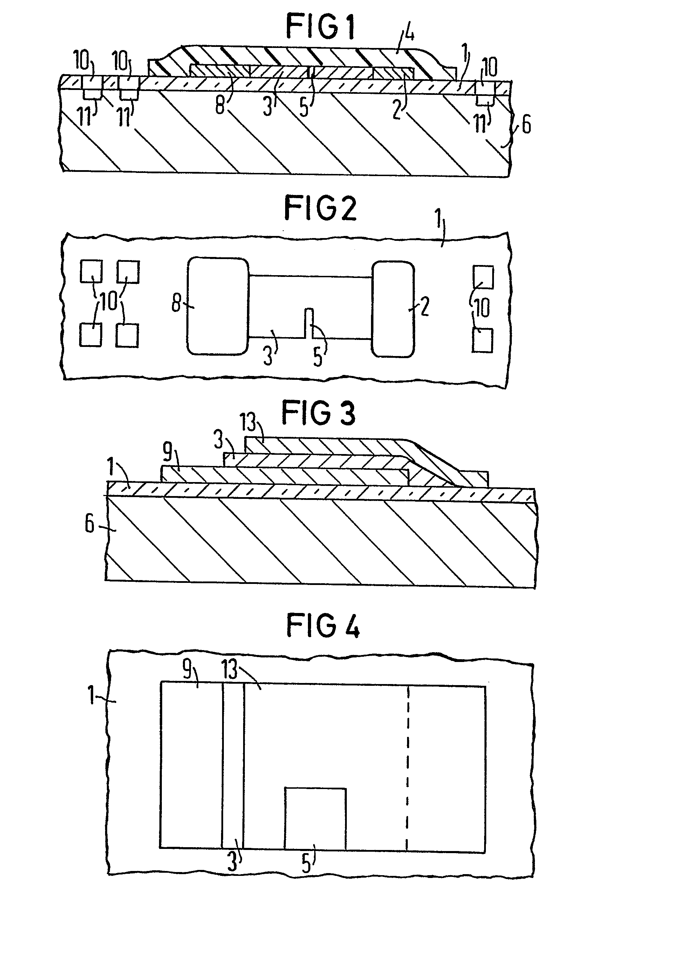

In Fig. 1 ist auf einem Siliciumsubstrat 6 eine Siliciumdioxidschicht 1 vorgesehen, in die durch die übliche Fotolack- und Ätztechnik Fenster 10 eingebracht sind. Durch diese Fenster 10 sind durch Diffusion oder Implantation Zonen 11 eingebracht, die eine zum Siliciumsubstrat 6 entgegengesetzte Dotierung besitzen. Wenn das Siliciumsubstrat beispielsweise n-dotiert ist, dann sind diese Zonen 11 p-dotiert. Die Zonen 11 bilden eine integrierte Schaltung im Siliciumsubstrat 6. Auf der Siliciumdioxidschicht 1 ist durch Aufdampfen, Sputtern, Abscheiden in einer Glimmentladung oder durch chemische Dampfabscheidung eine Siliciumschicht 3 aufgebracht, die in die gewünschte Form (vergleiche Fig. 2) durch naß- oder trockenchemische Verfahren oder mittels Sputtern gebracht ist, um so eine Isolation des herzustellenden Widerstandes gegenüber der Umgebung zu erzielen. Diese Siliciumschicht 3 ist mit Kontaktelektroden 2, 8 versehen, die zusammen mit der Siliciumschicht 3 den Temperatursensor bilden. Zur Einstellung des Widerstandes der Siliciumschicht 3 wird diese lokal durch einen Lasereinschnitt 5 zerstört, so daß der Widerstand zwischen den Kontaktelektroden 2 und 8 den gewünschten Wert annimmt. Zweckmäßigerweise wird der dem Lasereinschnitt 5 eindringende Laserstrahl bei gleichzeitiger Messung des Widerstandswertes zwischen den Kontaktelektroden 2 und 8 gesteuert. So kann beispielsweise die Einwirkung des Laserstrahles abgeschaltet werden, wenn dieser Widerstand den gewünschten Wert annimmt.

Während die Fig. 1 und 2 eine Horizontal-Anordnung zeigen, ist in den Fig. 3 und 4 eine Vertikal-Anordnung dargestellt. Bei dieser liegt die Siliciumschicht 3 zwischen einer unteren Kontaktelektrode 9 und einer oberen Kontaktelektrode 13. Bei diesem Ausführungsbeispiel ist der Lasereinschnitt 5 mit einer größeren Fläche vorzunehmen, da die Kontaktelektroden 9 und 13 lediglich über die relativ dünne Siliciumschicht 3 beabstandet sind und so nur durch einen relativ kleinen Widerstand voneinander getrennt werden.

Gegebenenfalls kann die gesamte Anordnung noch durch eine Passivierungsschicht 4 überdeckt werden, wie dies in Fig. 1 dargestellt ist.

4 Figuren
13 Patentansprüche

Patentansprüche

1. Temperatursensor mit einem Halbleiterkörper als Meßwiderstand, der an seinen zwei Enden mit wenigstens jeweils einer Kontaktelektrode versehen ist, so daß aus
dem Widerstandswert des Halbleiterkörpers die Temperatur
bestimmbar ist, d a d u r c h   g e k e n n -
z e i c h n e t ,  · daß der Halbleiterkörper als
Schicht (3) ausgeführt ist, die auf einem Substrat (6)
angeordnet ist.

2. Temperatursensor nach Anspruch 1, d a d u r c h
g e k e n n z e i c h n e t ,  daß das Substrat (6) aus
Halbleitermaterial besteht, und daß zwischen dem Substrat (6) und der Halbleiterschicht (3) eine Isolierschicht (1) vorgesehen ist.

3. Temperatursensor nach Anspruch 2, d a d u r c h
g e k e n n z e i c h n e t ,  daß im Substrat eine integrierte Schaltung (7) ausgeführt ist.

4. Temperatursensor nach einem der Ansprüche 1 bis 3,  ·
d a d u r c h   g e k e n n z e i c h n e t ,  daß die
Halbleiterschicht aus amorphem, polykristallinem oder
rekristallisiertem Silicium besteht.

5. Temperatursensor nach einem der Ansprüche 1 bis 4,
d a d u r c h   g e k e n n z e i c h n e t ,  daß die
Halbleiterschicht lokal zerstört ist.

6. Temperatursensor nach einem der Ansprüche 1 bis 5,
d a d u r c h   g e k e n n z e i c h n e t ,  daß die
beiden Kontaktelektroden (2, 8) an den beiden Enden der
Halbleiterschicht (3) parallel zur Oberfläche des Substrates (6) vorgesehen sind.

7. Temperatursensor nach einem der Ansprüche 1 bis 5, d a d u r c h g e k e n n z e i c h n e t , daß die beiden Kontaktelektroden (9, 13) an den beiden Enden der Halbleiterschicht (3) senkrecht zur Oberfläche des Substrates (6) vorgesehen sind.

8. Temperatursensor nach Anspruch 7, d a d u r c h g e k e n n z e i c h n e t , daß die eine Kontaktelektrode (9) zwischen der Isolierschicht (1) und der Halbleiterschicht (3) vorgesehen ist.

9. Temperatursensor nach einem der Ansprüche 1 bis 6, d a d u r c h g e k e n n z e i c h n e t , daß eine Passivierungsschicht (4) auf die Halbleiterschicht (3) und die Kontaktelektroden (2, 8) aufgetragen ist.

10. Verfahren zum Herstellen eines Temperatursensors nach einem der Ansprüche 1 bis 9, d a d u r c h g e k e n n z e i c h n e t , daß die Halbleiterschicht (3) durch Aufdampfen, Sputtern, Abscheiden in einer Glimmentladung oder durch chemische Dampfabscheidung auf das Substrat (6) bzw. die Isolierschicht (1) aufgebracht wird, und daß diese Halbleiterschicht (3) anschließend partiell entfernt wird, um den temperaturempfindlichen Teil des Temperatursensors gegenüber der Umgebung zu isolieren.

11. Verfahren nach Anspruch 10, d a d u r c h g e k e n n z e i c h n e t , daß das partielle Entfernen der Halbleiterschicht (3) naß- oder trockenchemisch oder mittels Sputtern erfolgt.

12. Verfahren nach Anspruch 10 oder 11, d a d u r c h g e k e n n z e i c h n e t , daß die Halbleiterschicht (3) durch Einwirkung eines Laserstrahles lokal zerstört wird.

13. Verfahren nach Anspruch 12, d a d u r c h  g e -
k e n n z e i c h n e t ,  daß durch das lokale Zerstören der Halbleiterschicht (3) ein Lasereinschnitt (5)
eingebracht wird, wobei gleichzeitig der Widerstandswert
des Temperatursensors gemessen wird, um so die Temperatur/Widerstandskennlinie des Temperatursensors abzugleichen.

**FIG 1**

**FIG 2**

**FIG 3**

**FIG 4**